(19) Europäisches Patentamt
European Patent Office
Office européen des brevets

(11) **EP 3 901 438 A1**

(12) **EUROPEAN PATENT APPLICATION**

(43) Date of publication:
**27.10.2021 Bulletin 2021/43**

(51) Int Cl.:
***F02C 7/12*** *(2006.01)*    ***F02C 7/24*** *(2006.01)*
***F02C 7/32*** *(2006.01)*

(21) Application number: **21167545.9**

(22) Date of filing: **09.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2020 GB 202005912**

(71) Applicant: **Rolls-Royce plc**
**London N1 9FX (GB)**

(72) Inventors:
• **Jones, Bryn**
  **Derby, Derbyshire DE24 8BJ (GB)**
• **Mills, Andrew**
  **Derby, Derbyshire DE24 8BJ (GB)**
• **Holtby, Daniel**
  **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **ELECTRONICS ENCLOSURE FOR GAS TURBINE ENGINE**

(57)    An electronics enclosure 400, 700, for use in a gas turbine engine 10. The electronics enclosure including: a housing 402; one or more electronic devices 403, located within the housing, for use in controlling or monitoring the gas turbine engine; and a thermoelectric cooler 406, 701, configured, based upon a determination of an operational state of the gas turbine engine, to change between an active cooling mode, whereby the thermoelectric cooler is provided with power and thereby operated to cool the inside of the housing, and a passive mode, in which the thermoelectric cooler is not operated.

FIG. 4A

**Description**

**Field of the disclosure**

The present disclosure relates to an electronics enclosure for a gas turbine engine.

**Background**

In conventional gas turbine engines, and specifically aerospace gas turbine engines, a central avionic computer is mounted to a fan case. However, there is an increasing trend towards the implementation of 'smart' engines in which the degree of electronic monitoring and control is increased. This is typically incompatible with a central avionic computer, due to the size constraints on the housing for such a computer.

A solution appears to be the decentralization of the electronic devices used for monitoring and controlling the gas turbine engine as this can allow lower wiring lengths, increased modularity, more resilient architectures, and smaller individual enclosures (which increases installation flexibility). However this leads to other challenges, notably managing the increase in temperature. This is particularly worrisome in soak-back conditions of a gas turbine engine, where the fan stops rotating (and so there is no cooling airflow) whilst the combustor remains hot. In addition to high temperatures, engines are required to start operation in very cold climates, in such cases increasing the electronics temperature is necessary to improve its survivability.

Potential solutions to the heat management issue include:

- Insulation. However, this is only acceptable if the housing does not generate its own internal heat, which is not the case for many aerospace electronics devices.
- Active refrigeration cycles (and active air cooling with the fan). However this requires moving parts, and so is typically less reliable.
- Fuel cooling. Although this incurs installation and design effort, with the resulting increase in weight and leakage risk.
- Replacement of electronic devices with higher temperature (i.e. hardened) variants. This is not possible in all cases, would increase the cost, and also may introduce obsolescence issues.

There is a need then for a heat management solution which does not suffer these drawbacks

**Summary**

According to a first aspect there is provided an electronics enclosure, for use in a gas turbine engine, including:

a housing;
one or more electronic devices, located within the housing, for use in controlling or monitoring the gas turbine engine; and
a thermoelectric cooler, configured, based upon a determination of an operational state of the gas turbine engine, to change between an active cooling mode, whereby the thermoelectric cooler is provided with power and thereby operated to cool the inside of the housing, and a passive mode, in which the thermoelectric cooler is not operated.

Such an electronics enclosure can more robustly and efficiently maintain the thermal security of the electronic devices within the housing and therefore improve the survivability of the same. Moreover, it reduces the thermal cycling of the electronic devices, which increases their lifespan.

Optional features of the present disclosure will now be set out. These are applicable singly or in any combination with any aspect of the present disclosure.

The thermoelectric cooler may be configured to operate in the active cooling mode when it is determined that the gas turbine engine is in operation. For example, the thermoelectric cooler may be configured to operate in the active cooling mode when the gas turbine engine, located on an aircraft, is being used during a cruise phase of a flight.

In the passive mode, the thermoelectric cooler may be operable to limit heat transfer to the one or more electronic devices from outside the housing. The thermoelectric cooler may be configured to operate in the passive mode when it is determined that the gas turbine engine is shutting down or not in operation. For example, the thermoelectric cooler may be configured to operate in the passive mode when the gas turbine engine, located on an aircraft, is not being used during a landing phase of the flight (or during an unintended shutdown of the engine, such as a compressor surge). The thermoelectric cooler may be configured to operate in the passive mode when it is determined that no driving current is being provided to the thermoelectric cooler, or if a control algorithm determines that the optimal power for the thermoelectric cooler is zero.

The thermoelectric cooler may be connected to a controller, which may be configured to control the thermoelectric cooler according to an extremum seeking algorithm. The controller may be located within the enclosure, or may be located in another part of the gas-turbine engine and connected to the controller. The controller may be configured to control an electrical current provided to the thermoelectric cooler according to the extremum seeking algorithm. The extremum seeking algorithm comprises:

applying a perturbation to an input parameter, and measuring an output;
correlating the output with the same perturbation, to estimate a derivative of the output parameter with respect to the input parameter; and
scaling the estimated derivative to maximise the heat pumped by the thermoelectric cooler.

The thermoelectric cooler may be controlled according to an observer-based extremum seeking control method, the observer generating a derivative estimate. The input parameter may be a perturbation to the electrical current, in order to excite a response from the thermoelectric cooler. The output may be the temperature, for example of the air inside the enclosure or some other local temperature. The thermoelectric cooler may be controlled according to a supervisory-control based extremum seeking control method.

The enclosure may include a thermal mass, which may be located adjacent to the thermoelectric cooler, and when the gas turbine engine is determined to be in operation, the thermoelectric cooler operates to cool the thermal mass, and when the gas turbine engine is determined to be shutting down or not in operation, the thermoelectric cooler acts to limit heat transfer to the thermal mass from outside the housing. The thermal mass may be the enclosure material itself, or use an additional high specific heat capacity material added to the assembly (e.g. container, holding water or antifreeze or some phase change material). The thermal mas may have a specific heat capacity of at least 4,200 $Jkg^{-1}$ $°C^{-1}$. The thermal mass may divide the interior of the housing into two regions: one region containing the thermoelectric cooler, and another region containing the electronic devices.

The electronics enclosure may further comprise a heatsink, located on an outer surface of the housing, the thermoelectric cooler may be configured to transfer heat from the interior of the housing to the heatsink, when the thermoelectric cooler is operating in the active cooling mode.

The enclosure may include a thermally insulating liner. The thermally insulating liner may be located on an outer surface of the housing. Where the enclosure includes a thermal mass, the thermally insulating liner may be located within the housing.

In a second aspect, there is provided a gas turbine engine for an aircraft comprising:

an engine core comprising a turbine, a compressor, and a core shaft connecting the turbine to the compressor;
a fan, located upstream of the engine core, the fan comprising a plurality of fan blades; and
the electronics enclosure of the first aspect, attached to a casing of the engine core.

The electronics enclosure of the second aspect may have any one, or any combination insofar as they are compatible, of the optional features set out with relation to the first aspect. The electronics enclosure may be attached to a casing of the compressor, turbine, or a combustor of the gas turbine engine.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8.. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being $Jkg^{-1} K^{-1}/(ms^{-1})^2$). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg$^{-1}$s, 105 Nkg$^{-1}$s, 100 Nkg$^{-1}$s, 95 Nkg$^{-1}$s, 90 Nkg$^{-1}$s, 85 Nkg$^{-1}$s or 80 Nkg$^{-1}$s. The specific thrust may be in an inclusive range bounded by any two of the values in the previous sentence (i.e. the values may form upper or lower bounds), for example in the range of from 80 Nkg$^{-1}$s to 100 Nkg$^{-1}$s, or 85 Nkg$^{-1}$s to 95 Nkg$^{-1}$s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000 ft (10668 m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

**Brief description of the drawings**

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4A is a cross-sectional schematic view of an electronics enclosure during operation of the gas turbine engine;

Figure 4B is a cross-sectional schematic view of the electronics enclosure of Figure 4A whilst the gas turbine engine is shutting down or not in operation;

Figure 5 is a control diagram of the extremum seeking algorithm;

Figure 6 is a plot of temperature against time;

Figure 7A is a cross-sectional schematic view of a variant electronics enclosure during operation of the gas turbine engine;

Figure 7B is a cross-sectional schematic view of the variant electronics enclosure of Figure 7A whilst the gas turbine engine is shutting down or not in operation; and

Figure 8 is a control diagram of a supervisor control algorithm.

**Detailed description**

Aspects and embodiments of the present disclosure will now be discussed with reference to the accompanying figures. Further aspects and embodiments will be apparent to those skilled in the art.

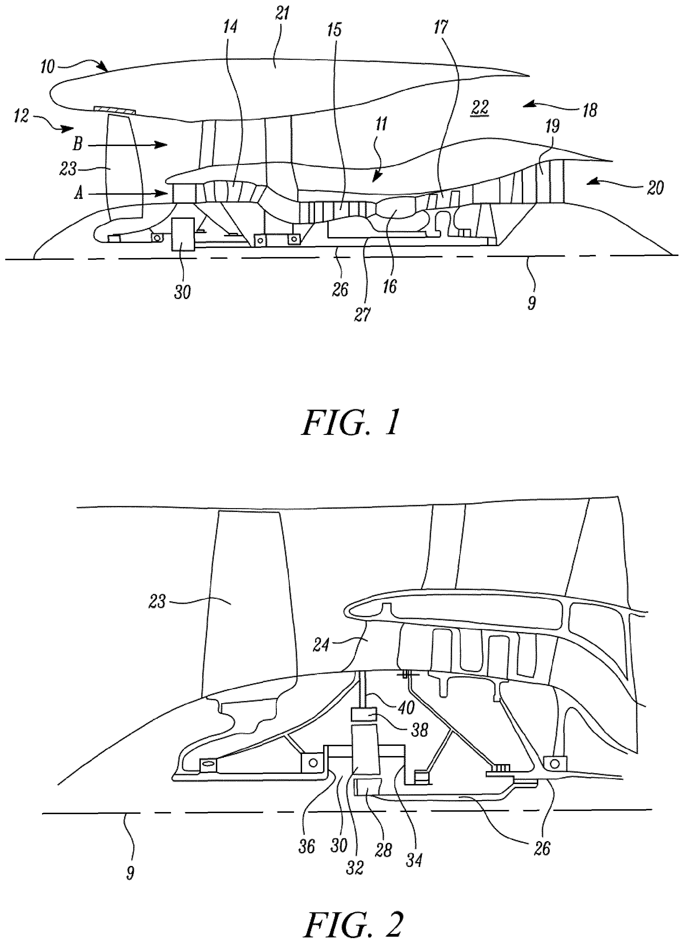

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

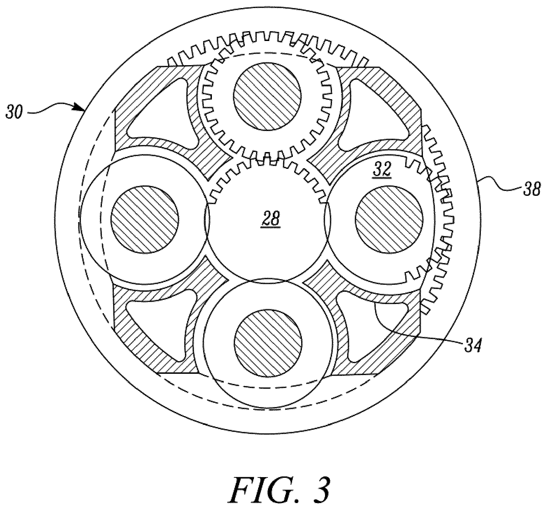

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

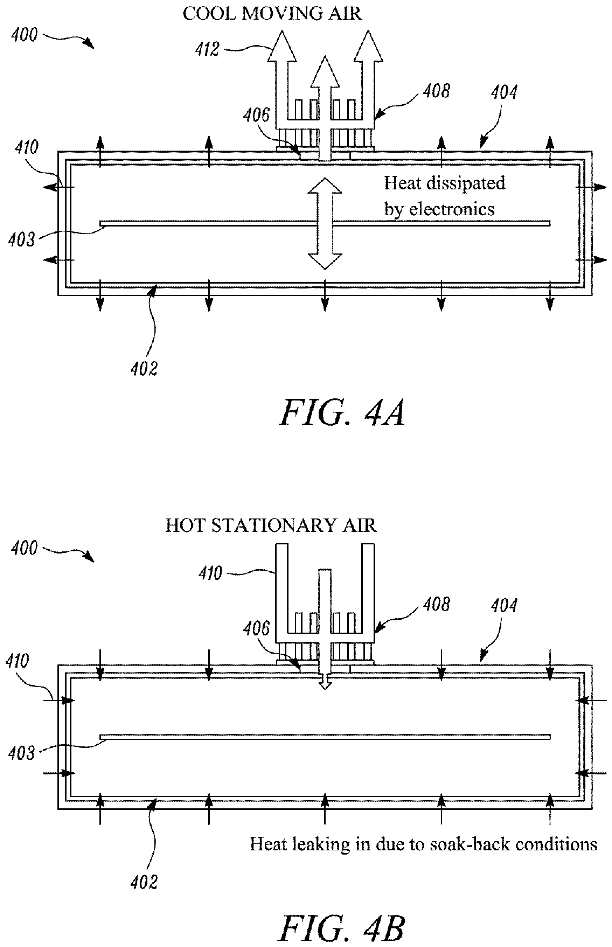

Figure 4A is a cross-sectional schematic view of an electronics enclosure 400 during operation of the gas turbine engine. The enclosure 400 is installed on a casing of the engine core, for example on a casing of one of the compressors. The enclosure is formed of a housing 402, which is surrounded by insulation 404. Electronic devices 403, for example full authority digital engine control (FADEC) devices or other devices suitable for controlling or monitoring the gas turbine engine, are located within the housing. The electronic devices generate heat, some of which exits the enclosure through the housing as shown by arrows 410.

Thermoelectric cooler 406 is located in a portion of the housing 402 and is operable, in an active cooling mode, to pump heat from within the housing to a heatsink 408 which is adjacent to the cooler on an outside surface of the housing 402. The thermoelectric cooler utilises the Peltier effect, where electric current transfers heat from a low to high (thermal) energy environment. The thermoelectric cooler is connected to a controller (not shown) which controls the operation of the thermoelectric cooler.

Whilst the gas turbine engine is in operation at altitude, a relatively cool (e.g. less than 0°C) air flow passes by the heat sink 408. Therefore a large amount of heat 412 can be extracted from the heatsink 408 during operation.

However, during and shortly after engine shutdown, the cool air flow is not present and instead the enclosure is surrounded by hot stationary air. This hot stationary air may have a temperature close to a maximum operating temperature of the electronics within the enclosure. Figure 4B is a cross-sectional schematic view of the electronics enclosure of Figure 4A whilst the gas turbine engine is shutting down. During this period, the thermoelectric cooler may be operated in a passive mode, where current is not provided, or if a control algorithm determines that a current should be provided it may be provided. The relatively high thermal resistivity of the thermoelectric cooler, when not in the active cooling mode, ensure that heat ingress into the enclosure is limited.

The behaviour of the thermoelectric cooler, with regards to the transmission of heat, can be defined by three separate terms:

> (1) The movement of heat from the cold side to the hot side as a result of the Peltier effect;
> (2) Self-heating due to the flow of current through the resistive device; and
> (3) Thermal conductance from the hot side to the cold side.

The governing equation for the heat moving capacity (a flow of energy, Q) of the thermoelectric cooler from the cold side to the hot side can be expressed as:

$$Q = S_M \cdot T_h \cdot I_{TEC} - \frac{1}{2} \cdot I_{TEC}^2 \cdot R_M - K_M \cdot (T_h - T_c), while\ I_{TEC} \geq 0$$

Where $S_M$ is the Seebeck Voltage in Volts per Kelvin, $R_M$ is the electrical resistance in Ohms, $K_M$ is the thermal conductance in Watts per Kelvin, $I_{TEC}$ is the current driving the thermoelectric cooler in Amperes, $T_h$ is the hot side temperature of the thermoelectric cooler in Kelvin, and $T_c$ is the cold side temperature of the thermoelectric cooler in Kelvin.

This relationship shows that, when the device is on, the optimal level of electrical current ($I_{TEC}$) should be controlled. A thermoelectric cooler has an optimum current draw at which maximum cooling is obtained. This point will vary as the thermal dynamics of the system change (e.g. surrounding air speed, surrounding air temperature, etc.). Therefore, some form of adaptive control and/or optimisation algorithm is useful to automatically drive the thermoelectric cooler to the optimal point.

One such method is extremum seeking control (ESC). Advantageously, ESC provides optimality and adaptability to changing engine environments. The ESC optimisation approach is non-model based, which also makes it more suited for dynamic systems such as in gas turbine engines, where factors are likely to change during use or where analytical information for the optimisation problem may be limited. ESC also provides a means of local autonomic control which will react to changing conditions which may be unforeseen in nature.

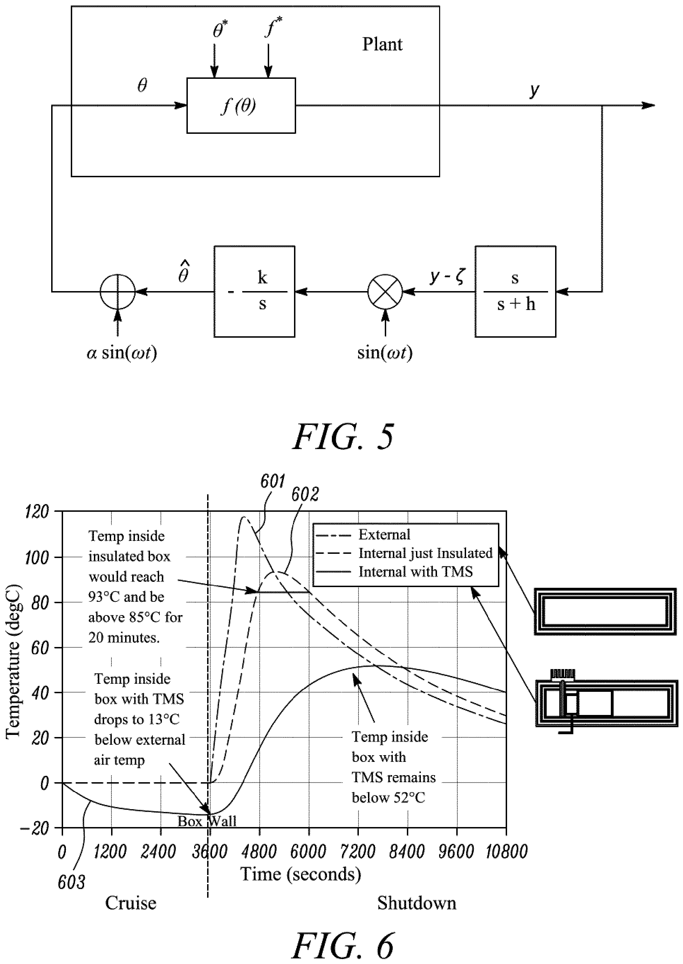

The working principle of an implementation of the ESC algorithm is shown in Figure 5, and is explained in general terms by Ariyur *et al* 2003 and Bishop *et al* 2011. A sinusoidal perturbation sin($\omega t$) is added to an initial estimate ($\hat{\theta}$) of the (unknown) optimal TEC input ($\theta^*$) and is provided as an input to the plant ($\theta$). The measured output is passed through a washout (high pass) filter $\left(\frac{s}{s+h}\right)$ to remove any DC offset. After this, the filtered output signal is multiplied with the same perturbation signal sin($\omega t$) resulting in an estimate of the derivative *f'($\theta$)*.

This estimated derivative is then scaled by a factor-*k*, and added to the input as an offset to the perturbation signal to drive it towards a zero gradient point (through the principle of gradient descent optimisation). If the scalar *k* > 0, then the Extremum Seeking algorithm will drive the plant to the nearest local minimum. Whereas, if *k* < 0, the algorithm will seek the local maximum.

Alternatively, the current driving the thermoelectric cooler may be regulated by scheduling (e.g. open-loop control) using flight information accessed from an engine management unit (e.g. altitude, surrounding air temperature, etc.).

Figure 6 is a plot of temperature against time for two electronics enclosures during the flight of an aircraft, including a gas turbine engine to which they were fitted. The aircraft underwent a cruise phase (time t=0 to t=3600) and a shutdown phase of the gas turbine engine (t=3600 to t= 10800).

A first electronics enclosure, the temperature of which is shown by line 602, contained only insulation and does not contain the thermoelectric cooler of the present disclosure. As shown, as the external temperature 601 rose, so too did the internal temperature of the first enclosure. The internal temperature reached 93°C at its highest, and was above 85°C for around 20 minutes. This would cause significant thermal degradation to electronic devices housed within the enclosure.

In contrast, a second electronics enclosure, the temperature of which is shown by line 603, contained insulation and also the thermoelectric cooler of the present disclosure. As shown, the temperature during the cruise phase of the flight dropped to around 13°C below the external air temperature 601, due to the active cooling provided by the thermoelectric cooler. Then, during the shutdown phase, whilst the temperature rose, it remained below 52°C at all times, which limits the degree of thermal degradation the devices within the enclosure.

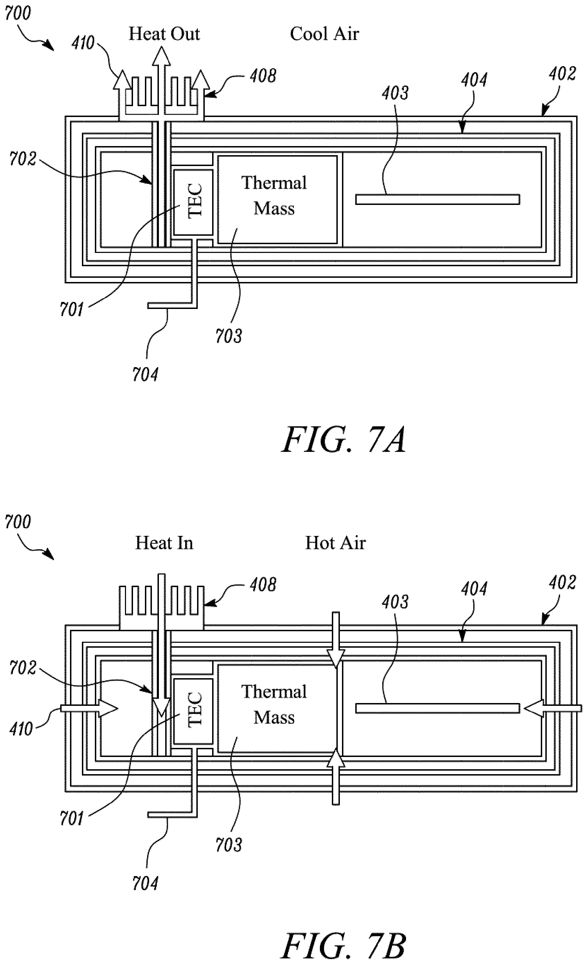

Figure 7A is a cross-sectional schematic view of a variant electronics 700 enclosure during operation of the gas turbine engine. Where the variant enclosure 700 shares features with the enclosure 400 shown previously, like features are indicated by like reference numerals. In contrast to the previous enclosure 400, the thermoelectric cooler 701 of enclosure 700 is located entirely within the housing 402 and connected to an external power supply 704.

Immediately adjacent to the thermoelectric cooler 701 is a thermal mass 703, for example a container of antifreeze or water, or another element with a very high specific heat capacity. On an opposing side of the thermoelectric cooler 701 is a heat pipe 702, which operates to draw heat away from the thermoelectric cooler 701 to the heatsink 408 (located on an outer surface of the housing 402). The thermal mass divides the interior of the housing 404 into two regions: a first containing the thermoelectric cooler, and a second containing the electronic devices 403.

In the enclosure 700, in contrast to the enclosure 400, the insulation 404 is located on an inner surface of the housing 402.

Figure 7B is a cross-sectional schematic view of the variant electronics enclosure of Figure 7A whilst the gas turbine engine is shutting down or not in operation. The heat flow 410 through the thermal mass is limited, and moreover the thermal mass functions as a passive cooler absorbing excess heat as it is warmed to ambient temperature.

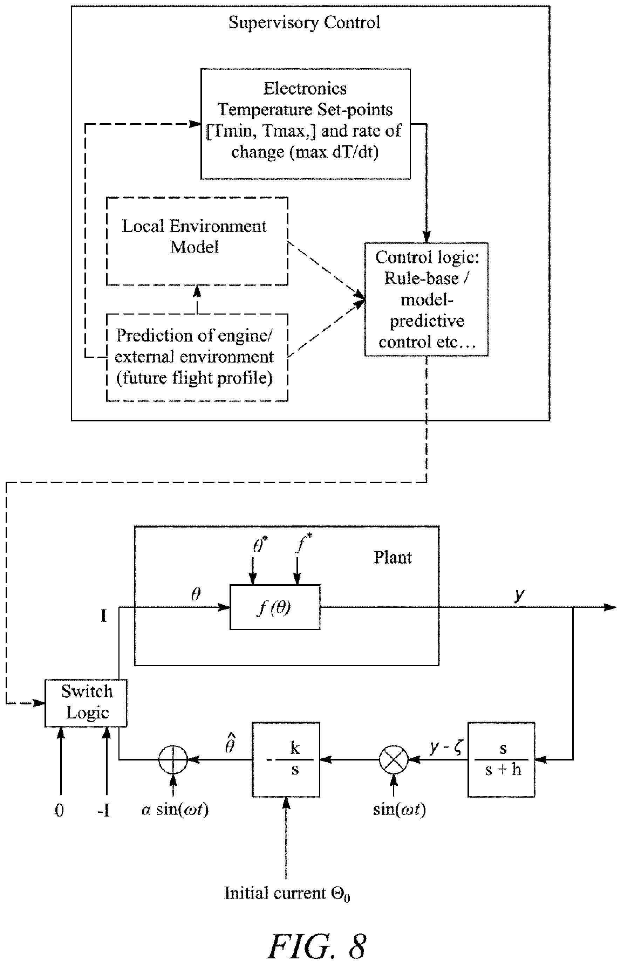

Figure 8 shows a variation of the extremum seeking control (ESC) algorithm discussed above with reference to Figure 6, which is referred to as a supervisory-control based extremum seeking control algorithm. As shown in Figure 8, an ESC is provided on the inner loop with an outer supervisor control outer loop. The outer loop determines an operating state of the TEC from: off (0); reverse (heating) (-I); or maximally cooling mode ($\theta$). The supervisory-control based ESC algorithm can optionally use a low fidelity model of the environment, and/or a prediction of the external environment. The control logical used to determine the state is based on a, potentially time-varying, 'best' temperature for the enclosure and/or electronics.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

*References*

Ariyur, Kartik B, and Miroslav Krstic. 2003. Real-Time Optimization by Extremum-Seeking Control. John Wiley & Sons.

Bishop, Brett K., William H. Moase, and Chris Manzie. 2011. Gain Selection in Observer-Based Extremum Seeking Schemes, IFAC Proceedings Volumes (IFAC-PapersOnline), 44:114-19. IFAC Secretariat

**Claims**

1.  An electronics enclosure (400, 700), for use in a gas turbine engine (10), including:

    a housing (402);
    one or more electronic devices (403), located within the housing, for use in controlling or monitoring the gas turbine engine; and
    a thermoelectric cooler (406, 701), configured, based upon a determination of an operational state of the gas turbine engine, to change between an active cooling mode, whereby the thermoelectric cooler is provided with power and thereby operated to cool the inside of the housing, and a passive mode, in which the thermoelectric cooler is not operated.

2.  The electronics enclosure of claim 1, wherein in the passive mode, the thermoelectric cooler is operable to limit heat transfer to the one or more electronic devices from outside the housing.

3.  The electronics enclosure of claim 1 or claim 2, wherein the thermoelectric cooler is configured to operate in the active cooling mode when it is determined that the gas turbine engine is in operation.

4.  The electronics enclosure of any one of the preceding claims, wherein the thermoelectric cooler is configured to operate in the passive mode when it is determined that the gas turbine engine is shutting down or is not in operation.

5. The electronics enclosure of any one of the preceding claims, wherein the thermoelectric cooler is connected to a controller, which is configured to control the thermoelectric cooler according to an extremum seeking algorithm.

6. The electronics enclosure of claim 5, wherein the controller is configured to control an electrical current provided to the thermoelectric cooler according to the extremum seeking algorithm.

7. The electronics enclosure of either claim 5 or claim 6, wherein the extremum seeking algorithm comprises:

applying a perturbation to an input parameter, and measuring an output;
correlating the output with the same perturbation, to estimate a derivative of the output parameter with respect to the input parameter; and
scaling the estimated derivative to maximise the heat pumped by the thermoelectric cooler.

8. The electronics enclosure of any one of the preceding claims, wherein the thermoelectric cooler is controlled according to an observer-based extremum seeking control method.

9. The electronics enclosure of any one of the preceding claims, wherein the enclosure includes a thermal mass (703), located adjacent to the thermoelectric cooler, and when the gas turbine engine is determined to be in operation, the thermoelectric cooler operates to cool the thermal mass, and when the gas turbine engine is determined to be shutting down or not in operation, the thermoelectric cooler acts to limit heat transfer to the thermal mass from outside the housing.

10. The electronics enclosure of claim 9, wherein the thermal mass comprises a container, holding water or antifreeze.

11. The electronics enclosure of any one of the preceding claims, further comprising a heatsink (408), located on an outer surface of the housing, wherein the thermoelectric cooler is configured to transfer heat from the interior of the housing to the heatsink, when the thermoelectric cooler is operating in the active cooling mode.

12. The electronics enclosure of any one of the preceding claims, further including a thermally insulating liner (404).

13. A gas turbine engine (10) for an aircraft comprising:

an engine core (11) comprising a turbine (19), a compressor (14), and a core shaft (26) connecting the turbine to the compressor;
a fan (23) located upstream of the engine core, the fan comprising a plurality of fan blades; and
the electronics enclosure (400, 700) of any one of the preceding claims, attached to a casing of the engine core.

14. The gas turbine engine of claim 13, further comprising a gearbox (30) that receives an input from the core shaft (26) and outputs drive to the fan so as to drive the fan at a lower rotational speed than the core shaft.

15. An aircraft, comprising the gas turbine engine (10) of any one of claims 13 to 14.



FIG. 1

FIG. 2

FIG. 3

**FIG. 4A**

COOL MOVING AIR

Heat dissipated by electronics

**FIG. 4B**

HOT STATIONARY AIR

Heat leaking in due to soak-back conditions

*FIG. 5*

*FIG. 6*

*FIG. 7A*

*FIG. 7B*

FIG. 8

Europäisches
Patentamt

European
Patent Office

Office européen
des brevets

## EUROPEAN SEARCH REPORT

Application Number

EP 21 16 7545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 139 019 A1 (UNITED TECHNOLOGIES CORP [US]) 8 March 2017 (2017-03-08)<br>* figures 4,5 *<br>* paragraphs [0059], [0066], [0068], [0073], [0074] *<br>----- | 1-15 | INV.<br>F02C7/12<br>F02C7/24<br>F02C7/32 |
| A | TWAHA SSENNOGA ET AL: "Maximum Power Point Tracking Control of a Thermoelectric Generation System Using the Extremum Seeking Control Method",<br>ENERGIES,<br>vol. 10, no. 12,<br>1 December 2017 (2017-12-01), page 2016, XP055823456,<br>DOI: 10.3390/en10122016<br>* paragraph [Introduction] *<br>----- | 5-8 | |
| X | EP 1 905 986 A2 (GEN ELECTRIC [US]) 2 April 2008 (2008-04-02)<br>* figures 2,3 *<br>* paragraphs [0005], [0015], [0016] *<br>----- | 1-4,9, 11-15 | |
| X | EP 3 637 483 A1 (ROLLS ROYCE CORP [US]; ROLLS ROYCE NAM TECH INC [US]) 15 April 2020 (2020-04-15)<br>* figures 5,6 *<br>* paragraphs [0004], [0013], [0068] *<br>----- | 1-4,9, 10,13-15 | TECHNICAL FIELDS SEARCHED (IPC)<br><br>F02C |

The present search report has been drawn up for all claims

| Place of search | Date of completion of the search | Examiner |
|---|---|---|
| The Hague | 12 July 2021 | Angelucci, Stefano |

EPO FORM 1503 03.82 (P04C01)

## ANNEX TO THE EUROPEAN SEARCH REPORT
## ON EUROPEAN PATENT APPLICATION NO.

EP 21 16 7545

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2021

| Patent document cited in search report | | Publication date | Patent family member(s) | | | Publication date |
|---|---|---|---|---|---|---|
| EP 3139019 | A1 | 08-03-2017 | EP | 3139019 | A1 | 08-03-2017 |
| | | | US | 2017058693 | A1 | 02-03-2017 |
| EP 1905986 | A2 | 02-04-2008 | CN | 101144429 | A | 19-03-2008 |
| | | | EP | 1905986 | A2 | 02-04-2008 |
| | | | JP | 5134321 | B2 | 30-01-2013 |
| | | | JP | 2008069780 | A | 27-03-2008 |
| | | | US | 7779811 | B1 | 24-08-2010 |
| EP 3637483 | A1 | 15-04-2020 | CA | 3052167 | A1 | 11-04-2020 |
| | | | EP | 3637483 | A1 | 15-04-2020 |
| | | | US | 2020119247 | A1 | 16-04-2020 |

EPO FORM P0459

For more details about this annex : see Official Journal of the European Patent Office, No. 12/82

## REFERENCES CITED IN THE DESCRIPTION

**Non-patent literature cited in the description**

- **ARIYUR, KARTIK B ; MIROSLAV KRSTIC.** Real-Time Optimization by Extremum-Seeking Contro. John Wiley & Sons, 2003

- **BISHOP, BRETT K. ; WILLIAM H. MOASE ; CHRIS MANZIE.** Gain Selection in Observer-Based Extremum Seeking Schemes. *IFAC Proceedings Volumes (IFAC-PapersOnline),* 2011, vol. 44, 114-19